# EUROPÄISCHE PATENTSCHRIFT

(11) **EP 0 946 241 B1**
(45) Veröffentlichungstag und Bekanntmachung des Hinweises auf die Patenterteilung: **04.10.2001**
(21) Anmeldenummer: 97947692.6
(22) Anmeldetag: 18.10.1997
(51) Int. Cl.: B01D 21/00, B01D 21/02, B01D 21/24, C02F 3/32

(54) **ANLAGE ZUR ABWASSERREINIGUNG**
WASTE WATER TREATMENT PLANT
INSTALLATION D'EPURATION D'EAUX USEES

(30) Priorität: 26.10.1996 DE 29618687 U
(43) Veröffentlichungstag der Anmeldung: 06.10.1999
(73) Patentinhaber: Markgraf, Karl, D-38459 Bahrdorf (DE)
(72) Erfinder: Markgraf, Karl, D-38459 Bahrdorf (DE)
(74) Vertreter: Gramm, Werner, Prof. Dipl.-Ing.
(86) Internationale Anmeldenummer: DE9702411
(87) Internationale Veröffentlichungsnummer: WO9818536

(56) Entgegenhaltungen:
- US-A- 3 713 543

## Beschreibung

Die Erfindung betrifft eine Anlage zur Abwasserreinigung.

Der EP 0 409 367 B1 lassen sich ein Verfahren sowie eine Anlage zur Abwasserreinigung entnehmen. Nach diesem Verfahren wird das zu reinigende Abwasser zuerst aufgestaut, so daß sich Feststoffe absetzen können. Im Überlaufverfahren wird dann das vorgereinigte Abwasser aus der ersten Staustufe durch filternde, aus Pflanzenresten und/oder Holzstücken gebildete Sickerstrecken in zumindest eine weitere Staustufe geleitet. Das zurückbleibende Gemisch aus Dickstoffen und Schlamm wird abgepumpt, durch Abtropfen entwässert, anschließend auf einer Freifläche mit wasserdichtem Untergrund gelagert und schließlich zu Kompost umgewandelt. Das bei der genannten Entwässerung sowie bei der genannten Lagerung der Absetzprodukte anfallende Sickerwasser wird dem zu reinigenden Abwasser wieder zugesetzt. Zur Bildung eines biologischen Immissionsschutzes werden das aufgestaute Abwasser sowie das aus den Staustufen abgepumpte Absetzprodukt mit biologischen Abdeckstoffen, z.B. Pflanzenresten, groben Hackschnitzeln oder dergl. abgedeckt. Bei nachlassender Wirkung werden die den Immissionsschutz bildenden Stoffe gegen neue Stoffe ausgetauscht und dem entwässerten Absetzprodukt zur Kompostierung beigegeben.

Die Anlage zur Durchführung des vorstehend beschriebenen Verfahrens weist ein erstes Rückhaltebecken zur Aufnahme und als Staustufe für das kontinuierlich zugeleitete Abwasser auf.

Diesem ersten Rückhaltebecken ist zumindest ein weiteres Rückhaltebecken nachgeordnet, das mit dem ersten Rückhaltebecken über zumindest eine einen Überlauf bildende, aus Pflanzenresten und/oder Holzstückchen und/oder Rohhumus bestehende Sickerstrecken verbunden ist. Ein Vorratsbehälter, der über ein Pumpen/Leitungssystem mit den Rückhaltebecken verbunden ist, dient zur Aufnahme des abgepumpten Gemisches aus Dickstoffen und Schlamm, weist einen Ablauf für das abtropfende Wasser auf und ist zumindest teilweise gefüllt mit Pflanzenresten und/oder Holzstückchen. Vorgesehen ist ferner ein mit einem wasserdichten Boden ausgerüsteter freier Lagerplatz, der zur Aufnahme des in dem genannten Vorratsbehälter entwässerten Absetzproduktes dient und zumindest einen Ablauf für Sickerwasser aufweist. Die Abläufe des Vorratsbehälters und dieses Lagerplatzes sind an eines der Rückhaltebecken oder an deren Zulauf angeschlossen. Alle Rückhaltebecken sowie der Vorratsbehälter sind mit einer aus biologischen Abdeckstoffen bestehenden Immissionsschutzschicht abgedeckt. Schließlich ist noch ein erdverbundener Kompostierungs-Lagerplatz vorgesehen zur Aufnahme des entwässerten Absetzproduktes vom freien Lagerplatz, vermischt mit den entfernten Filter- und Immissionsschutzstoffen.

Das Verfahren hat sich in der Praxis vielfältig bewährt. Der vorliegenden Erfindung liegt jedoch die Aufgabe zugrunde, für ein derartiges Abwasserreinigungsverfahren eine insgesamt kompaktere Anlage zu entwickeln.

Diese Aufgabe wird bei einer einen behälterförmigen Dickstoffabscheider aufweisenden Anlage zur Abwasserreinigung in erster Linie durch folgende Merkmale des Dickstoffabscheiders gelöst:
a) In der Behälterwandung sind vorzugsweise auf sich gegenüberliegenden Seiten ein Abwassereinlauf für eine anschließbare Abwasserleitung sowie ein Spülwasser-Ablauf für das vorgereinigte Wasser vorgesehen;
b) ein unterer Behälterabschnitt umschließt einen Absetzbereich für Dick- und Absetzstoffe;
c) der Boden dieses Absetzbereiches ist als Pumpensumpf für eine Feststoffpumpe ausgebildet;
d) im oberen Behälterbereich ist ein herausnehmbarer, topfförmiger Entwässerungseinsatz gelagert, dessen Boden mit Sieblochungen versehen ist;
e) auf dem Boden des Entwässerungseinsatzes ist ein Sieb vorgesehen, das konzentrisch und mit lichtem Abstand zur Einsatzwandung angeordnet ist;
f) der ringförmige, zwischen Sieb, Einsatzwandung und Einsatzboden gebildete Entwässerungskanal ist mit einer aus Naturmaterialien, insbesondere Hackschnitzeln, bestehenden Filtermasse befüllt;
g) der Einsatzboden weist eine sich zum Einsatzinnenraum hin öffnende, mit der Pumpendruckleitung in Verbindung stehende Ausströmöffnung sowie einen mit dieser Ausströmöffnung fluchtenden, in lichtem Abstand oberhalb des Einsatzbodens liegenden Prallteller zur Ablenkung der hochgepumpten Feststoffsuspension auf;
h) der Dickstoffabscheider ist auf seiner Oberseite durch einen Behälterdeckel verschließbar, der für den Behälterinnenraum eine Beatmungsöffnung aufweist, in der ein Bioluftfilter vorgesehen ist.

Dabei ist es zweckmäßig, wenn der Dickstoffabscheider als stehender, im Querschnitt runder Behälter ausgebildet ist.

Eine konstruktiv einfache und leicht zu handhabende Ausführungsform ist dann gegeben, wenn der topfförmige Entwässerungseinsatz auf einem Traggestell aufliegt, das eine das Ende der Pumpendruckleitung bildende Einstecköffnung aufweist, in die ein die Strömungsverbindung mit der genannten Ausströmöffnung herstellender Steckzapfen lösbar eingreift, der auf der Unterseite des Einsatzbodens angeordnet ist.

Kapazitätsabhängig kann es zweckmäßig sein, wenn auch die Einsatzwandung mit Sieblochungen versehen und mit der genannten Filtermasse abgedeckt ist.

Der Abwassereinlauf des Dickstoffabscheiders kann an die Abwasserleitung z.B. eines 4-bis-100-Personen-Haushaltes angeschlossen werden. Die mit dem Abwasser in den Dickstoffabscheider strömenden Dick- und Absetzstoffe setzen sich in dem unteren Behälterbereich ab und werden aus dem Pumpensumpf durch die z.B. einmal täglich eingeschaltete Feststoffpumpe nach oben gepumpt, wo sie in Form eines Druckstrahles gegen die Unterseite des genannten Pralltellers auftreffen, der vorzugsweise zentrisch im Entwässerungseinsatz angeordnet ist und die hochgepumpte Feststoffsuspension in Form eines kreisringförmigen Sprühnebels gegen die Innenwandung des eingesetzten Siebes ablenkt. Diese hochgepumpten Dick- und Absetzstoffe haben einen Trockensubstanzgehalt von ca. 5 % und lagern sich im Innenraum des Siebes ab. Die Entwässerung erfolgt in radialer sowie in axialer Richtung durch die sich im Entwässerungskanal befindliche Filtermasse und dann durch die Sieblochungen im Boden und gegebenenfalls auch in der Wandung des topfförmigen Entwässerungseinsatzes hindurch. Das aus dem topfförmigen Entwässerungseinsatz abtropfende Wasser strömt in den unteren Bereich des Dickstoffabscheiders zurück und gelangt dadurch wieder in den Klärkreislauf.

Durch die kontinuierliche Entwässerung der sich im Innenraum des topfförmigen Entwässerungseinsatzes ablagernden Dick- und Absetzstoffe verringert sich deren Gewicht. Aus diesen Stoffen bildet sich daher eine Schwimmschicht, deren Pegel langsam ansteigt, wobei die periodisch hochgepumpten Dick- und Absetzstoffe unterhalb dieser Schwimmschicht in den topfförmigen Entwässerungseinsatz eintreten. Man kann daher das untere Drittel der axialen Höhe des Entwässerungseinsatzes als Hauptentwässerungszone und die verbleibende axiale Höhe als Nachentwässerungszone bezeichnen. Die Dick- und Absetzstoffe werden bis zu einer Restfeuchte von etwa 30 % entwässert.

Hat die genannte Schwimmschicht den oberen Rand des topfförmigen Entwässerungseinsatzes erreicht, ist letzterer praktisch vollständig mit Dick- und Absetzstoffen befüllt. Dies wird über eine entsprechende Meß- bzw. Kontrolleinrichtung festgestellt, die dann die Feststoffpumpe abschaltet. Der Behälterdeckel wird dann geöffnet und der topfförmige Entwässerungseinsatz wird mit Hilfe einer Hebe- und Kippvorrichtung herausgenommen und entleert und zwar einschließlich der Filtermasse. Dieses entleerte Gemisch wird zweckmäßig unmittelbar auf einen Komposthaufen gebracht, in dem dann Temperaturen im Bereich von 50 - 70°C entstehen. Hierdurch erfolgt ohne Fremdwärmezuführung eine Hitzehygienisierung, so daß man letztendlich hygienisierten Wertkompost erhält.

Je nach Kapazitätsauslegung muß bei derartigen Kompaktanlagen der topfförmige Entwässerungseinsatz ein- bis zweimal jährlich entleert werden. Aufgrund dieser langen Zeiträume erreicht man in dem Dickstoffabscheider bzw. seinem Entwässerungseinsatz bereits eine Vorkompostierung bzw. Vorrotte der permanent entwässerten Dick- und Absetzstoffe. Der sich oberhalb des Flüssigkeitsspiegels befindliche Innenraum des Dickstoffabscheiders kann daher auch als aerober Bereich bezeichnet werden.

Da die Dick- und Absetzstoffe in regelmäßigen Abständen aus dem unteren Absetzbereich des Dickstoffabscheiders nach oben abgepumpt und hier unverzüglich und permanent entwässert werden, wird in dem Absetzbereich ein Faulprozeß und damit auch die Entstehung von Schwefeldioxyd vermieden. Somit fallen keine Klär- und Fäkalschlämme, sondern nur entwässerte Dickstoffe als Kompost an.

Aufgrund der sich im Innenraum des Dickstoffabscheiders ändernden Volumenzustände erfolgt eine Behälterbeatmung. Diese erfolgt erfindungsgemäß durch den Behälterdeckel, der auf seiner Innenseite mit einem Lochblech, Sieb oder dergl. versehen sein kann, auf dem ein Bioluftfilter vorgesehen ist. Hierbei handelt es sich vorzugsweise um eine Schüttung aus Holzhackschnitzeln und Natursubstrat, angereichert mit Pilzen und dergl. Die durch dieses Bioluftfilter erfolgende "Atmung" ist absolut geruchsfrei.

Durch den von dem Prallteller erzeugten Sprühschleier wird das Sieb auf seiner radial innenliegenden Wandung horizontal beaufschlagt, so daß bei jedem durch Anlaufen der Feststoffpumpe bewirkten Füllvorgang eine Selbstreinigung erfolgt.

Im Innenraum des Dickstoffabscheiders befindet sich vor dessen Spülwasser-Ablauf eine Tauchwand zur Zurückhaltung von Schwimmstoffen.

Hinsichtlich der weiteren Ausgestaltung der Anlage ist es zweckmäßig, wenn der Spülwasser-Ablauf des Dickstoffabscheiders an einen Pumpschacht angeschlossen ist, der eine Beschickungspumpe für die Obenbeschickung eines vertikal durchströmten Pflanzbeetes aufweist und gegebenenfalls auch im Dickstoffabscheider integriert sein kann.

Dabei kann ein Kontroll- und Sammelschacht vorgesehen werden, der das von dem Pflanzbeet ablaufende, biologisch nachgereinigte Wasser auffängt.

Die Vorreinigung in dem erfindungsgemäßen Dickstoffabscheider ist so groß, daß über den Pumpschacht nur Spülwasser weitergeleitet wird, das zuvor als Transportmittel für die Dick- und Absetzstoffe diente. Das im Kontroll- und Sammelschacht aufgefangene Ablaufwasser kann als hygienisiertes Brauchwasser wieder in den Haushalt, z.B. in einem zweiten Kreislauf zur Toilettenspülung, zurückgeführt werden. Dadurch ist eine Brauchwassernutzung möglich. Aufgrund der starken Vorreinigung ergibt sich auch eine entsprechend geringe Belastung des Pflanzbeetes und daraus folgend eine nahezu unbegrenzte Lebensdauer für das Pflanzbeet aufgrund einer Selbstregenerierung.

Durch die erfindungsgemäß erzielbare ganzheitliche Abwasserreinigung mit integrierter Kompostierung und Hygienisierung der Dick- und Absetzstoffe läßt sich ein abfalloses Grundstück erreichen.

In der Zeichnung ist eine als Beispiel dienende Ausführungsform der Erfindung schematisch dargestellt. Es zeigen:
- **Figur 1**: in einem lotrechten Mittelschnitt einen Dickstoffabscheider und
- **Figur 2**: eine Anlage zur Abwasserreinigung mit einem Dickstoffabscheider gemäß Figur 1.

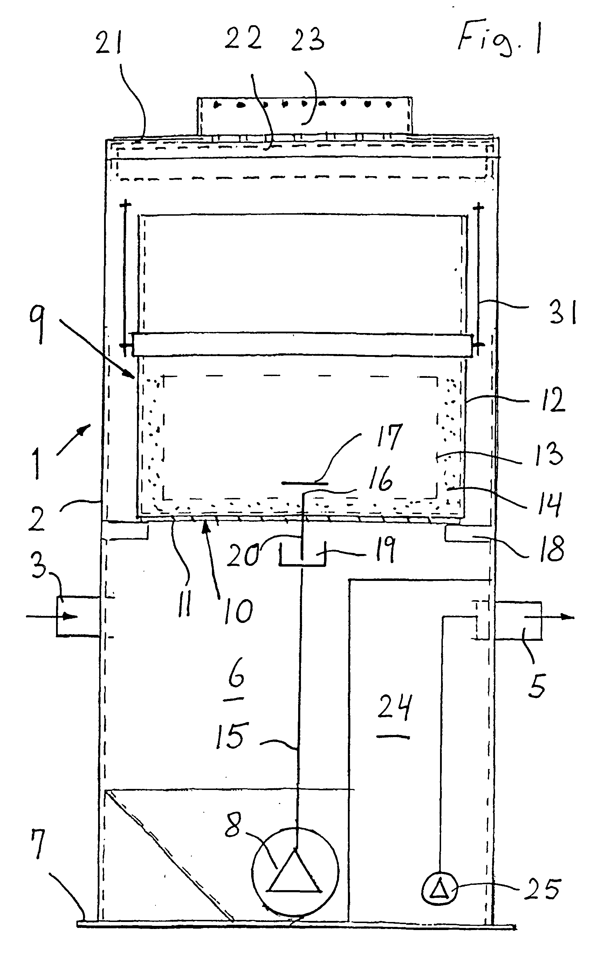

Figur 1 zeigt einen behälterförmigen Dickstoffabscheider 1, in dessen Behälterwandung 2 etwa im mittleren Höhenbereich auf sich gegenüberliegenden Seiten ein Abwassereinlauf 3 für eine anschließbare Abwasserleitung 4 sowie ein Spülwasser-Ablauf 5 für das vorgereinigte Wasser vorgesehen sind. Der unterhalb des Abwassereinlaufes 4 liegende Behälterabschnitt 6 umschließt einen Absetzbereich für Dick- und Absetzstoffe. Der Boden 7 dieses Absetzbereiches ist als Pumpensumpf für eine Feststoffpumpe 8 ausgebildet.

Im oberen Behälterbereich ist ein herausnehmbarer, topfförmiger Entwässerungseinsatz 9 gelagert, dessen Boden 10 mit Sieblochungen 11 versehen ist. Gegebenenfalls kann auch noch die Einsatzwandung 12 mit entsprechenden Sieblochungen 11 versehen sein. Auf dem Boden 10 des Entwässerungseinsatzes 9 ist ein Sieb 13 vorgesehen, das konzentrisch und mit lichtem Abstand zur Einsatzwandung 12 angeordnet ist. Der ringförmige, zwischen Sieb 13, Einsatzwandung 12 und Einsatzboden 10 gebildete Entwässerungskanal ist mit einer aus Naturmaterialien, insbesondere Hackschnitzeln, bestehenden Filtermasse 14 befüllt.

Der Einsatzboden 10 des Entwässerungseinsatzes 9 weist eine sich zum Einsatzinnenraum hin öffnende, mit der Pumpendruckleitung 15 in Verbindung stehende Ausströmöffnung 16 sowie einen mit dieser Ausströmöffnung 16 fluchtenden, in lichtem Abstand oberhalb des Einsatzbodens 10 liegenden Prallteller 17 zur Ablenkung der hochgepumpten Feststoffsuspension auf.

Der topfförmige Entwässerungseinsatz 9 liegt auf einem Traggestell 18 auf, das eine das Ende der Pumpendruckleitung 15 bildende Einstecköffnung 19 aufweist, in die ein die Strömungsverbindung mit der genannten Ausströmöffnung 16 herstellender Steckzapfen 20 lösbar eingreift, der auf der Unterseite des Einsatzbodens 10 angeordnet ist.

Der Dickstoffabscheider 1 ist auf seiner Oberseite durch einen Behälterdeckel 21 verschließbar, der für den Behälterinnenraum eine Beatmungsöffnung 22 aufweist, in der ein Bioluftfilter 23 vorgesehen ist.

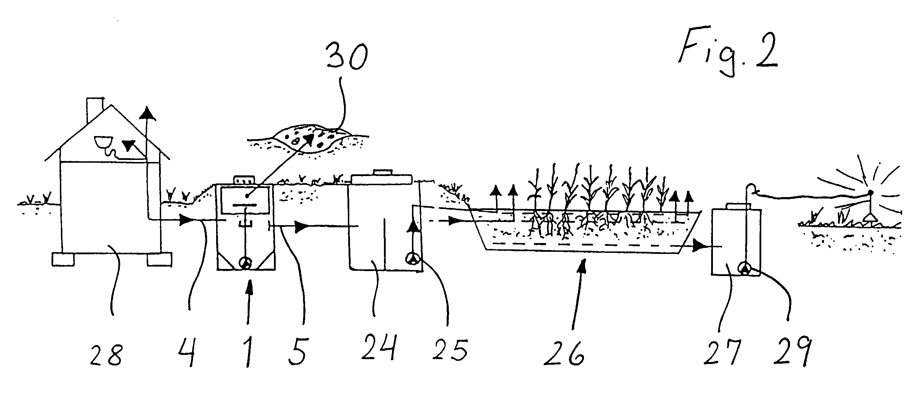

Bei dem in Figur 1 dargestellten Ausführungsbeispiel ist in den als stehender, im Querschnitt runder Behälter ausgebildeten Dickstoffabscheider 1 ein Pumpschacht 24 integriert, der auf dem Behälterboden 7 steht, sich über eine Teilhöhe des unteren Behälterabschnitts 6 erstreckt und eine Grundfläche aufweist, die etwa einem Quadranten des Behälterbodens 7 entspricht. Der Pumpschacht 24 kann oben offen ausgebildet oder aber mit einem Sieb abgedeckt sein und weist eine Beschickungspumpe 25 für die Obenbeschickung eines vertikal durchströmten Pflanzbeetes 26 auf (siehe Figur 2). Das von diesem Pflanzbeet 26 ablaufende, biologisch nachgereinigte Wasser kann dann von einem Kontroll- und Sammelschacht 27 aufgefangen werden.

Figur 2 zeigt schematisch eine Abwasserreinigungsanlage mit dem entsprechenden Verfahrensablauf: Das aus z. B. einem 10-Personen-Haushalt 28 abgeführte Abwasser gelangt über die bereits vorstehend erwähnte Abwasserleitung 4 in den unteren Behälterabschnitt 6 des Dickstoffabscheiders 1. Das von Dickstoffen befreite Spülwasser gelangt dann über den Spülwasser-Ablauf 5 in einen hier separat dargestellten Zwei-Kammer-Pumpschacht 24, von wo es über die Beschickungspumpe 25 auf das Pflanzbeet 26 gepumpt wird. Das dort ablaufende biologisch nachgereinigte Wasser wird dann in dem Kontroll- und Sammelschacht 27 aufgefangen, von wo es über eine Pumpe 29 einer landbaulichen Bodenbehandlung, z. B. einer Beregnungsanlage zugeführt werden kann. Die im Dickstoffabscheider 1 abgeschiedenen Vorkompostierungsdickstoffe können einem Kompostbeet 30 zugeführt werden.

Zur leichteren Entleerung des Dickstoffabscheiders 1 von den abgeschiedenen Dickstoffen ist eine Hub- und Kippvorrichtung 31 vorgesehen, mit der sich der Entwässerungseinsatz 9 problemlos aus dem zuvor geöffneten Dickstoffabscheider 1 herausheben und dann z. B. über dem genannten Kompostbeet 30 entleeren läßt.

## Patentansprüche

1. Anlage zur Abwasserreinigung, mit einem behälterförmigen Dickstoffabscheider (1), der folgende Merkmale aufweist:
a) in der Behälterwandung (2) sind, vorzugsweise auf sich gegenüberliegenden Seiten, ein Abwassereinlauf (3) für eine anschließbare Abwasserleitung (4) sowie ein Spülwasser-Ablauf (5) für das vorgereinigte Wasser vorgesehen;
b) ein unterer Behälterabschnitt (6) umschließt einen Absetzbereich für Dick- und Absetzstoffe;
c) der Boden (7) dieses Absetzbereiches ist als Pumpensumpf für eine Feststoffpumpe (8) ausgebildet;
d) im oberen Behälterbereich ist ein herausnehmbarer, topfförmiger Entwässerungseinsatz (9) gelagert, dessen Boden (10) mit Sieblochungen (11) versehen ist;
e) auf dem Boden (10) des Entwässerungseinsatzes (9) ist ein Sieb (13) vorgesehen, das konzentrisch und mit lichtem Abstand zur Einsatzwandung (12) angeordnet ist;
f) der ringförmige, zwischen Sieb (13), Einsatzwandung (12) und Einsatzboden (10) gebildete Entwässerungskanal ist mit einer aus Naturmaterialien, insbesondere Hackschnitzeln, bestehenden Filtermasse (14) befüllt;
g) der Einsatzboden (10) weist eine sich zum Einsatzinnenraum hin öffnende, mit der Pumpendruckleitung (15) in Verbindung stehende Ausströmöffnung (16) sowie einen mit dieser Ausströmöffnung (16) fluchtenden, in lichtem Abstand oberhalb des Einsatzbodens (10) liegenden Prallteller (17) zur Ablenkung der hochgepumpten Feststoffsuspension auf;
h) der Dickstoffabscheider (1) ist auf seiner Oberseite durch einen Behälterdeckel (21) verschließbar, der für den Behälterinnenraum eine Beatmungsöffnung (22) aufweist, in der ein Bioluftfilter (23) vorgesehen ist.

2. Anlage nach Anspruch 1, **dadurch gekennzeichnet, daß** der Dickstoffabscheider (1) als stehender, im Querschnitt runder Behälter ausgebildet ist.

3. Anlage nach Anspruch 1 oder 2, **dadurch gekennzeichnet, daß** der topfförmige Entwässerungseinsatz (9) auf einem Traggestell (18) aufliegt, das eine das Ende der Pumpendruckleitung (15) bildende Einstecköffnung (19) aufweist, in die ein die Strömungsverbindung mit der genannten Ausströmöffnung (16) herstellender Steckzapfen (20) lösbar eingreift, der auf der Unterseite des Einsatzbodens (10) angeordnet ist.

4. Anlage nach Anspruch 1, 2 oder 3, **dadurch gekennzeichnet, daß** auch die Einsatzwandung (12) mit Sieblochungen (11) versehen und mit der genannten Filtermasse (14) abgedeckt ist.

5. Anlage nach einem der vorhergehenden Ansprüche, **dadurch gekennzeichnet, daß** der Spülwasser-Ablauf (5) des Dickstoffabscheiders (1) an einen Pumpschacht (24) angeschlossen ist, der eine Beschickungspumpe (25) für die Obenbeschickung eines vertikal durchströmten Pflanzbeetes (26) aufweist.

6. Anlage nach Anspruch 5, **dadurch gekennzeichnet, daß** der Pumpschacht (24) in den Dickstoffabscheider (1) integriert ist.

7. Anlage nach Anspruch 5 oder 6, **gekennzeichnet durch** einen das von dem Pflanzbeet (26) ablaufende, biologisch nachgereinigte Wasser auffangenden Kontroll- und Sammelschacht (27).

## Claims

1. Effluent treatment plant, comprising a tank-shaped thick matter separator (1), which has the following features:
a) in the tank wall (2), preferably at mutually opposing sides, an effluent inlet (3) for a connectable effluent pipe (4) as well as a flushing-water outlet (5) for the pre-treated water are provided;
b) a lower tank portion (6) surrounds a settling zone for thick matter and sedimentation;
c) the base (7) of said settling region takes the form of a pump sump for a solid matter pump (8);
d) mounted in the upper tank region is a removable, pot-shaped drainage cage (9), of which the base (10) is provided with perforations (11);
e) provided on the base (10) of the drainage cage (9) is a screen (13), which is disposed concentrically with and at a clear distance from the cage wall (12);
f) the annular drainage channel formed between screen (13), cage wall (12) and cage base (10) is filled with a filter mass (14) comprising natural materials, in particular wood chips;
g) the cage base (10) has a discharge opening (16), which opens towards the cage interior and communicates with the pump pressure line (15), as well as a rebounding plate (17), which is aligned with said discharge opening (16) and situated a clear distance above the cage base (10), for deflecting the upwardly pumped solids suspension;
h) the thick matter separator (1) is closable at the top by means of a tank lid (21), which for the tank interior has a breathing aperture (22), in which a bio air filter (23) is provided.

2. Plant according to claim 1, **characterized in that** the thick matter separator (1) takes the form of an upright tank with a round cross section.

3. Plant according to claim 1 or 2, **characterized in that** the pot-shaped drainage cage (9) rests on a supporting frame (18) having an insertion opening (19), which forms the end of the pump pressure line (15) and into which a spigot (20) disengageably engages, which is disposed at the underside of the cage base (10) and establishes the flow connection to the said discharge opening (16).

4. Plant according to claim 1, 2 or 3, **characterized in that** the cage wall (12) is also provided with perforations (11) and covered with the said filter mass (14).

5. Plant according to one of the preceding claims, **characterized in that** the flushing-water outlet (5) of the thick matter separator (1) is connected to a pump shaft (24), which comprises a feed pump (25) for top-feeding a vertical-flow plant bed (26).

6. Plant according to claim 5, **characterized in that** the pump shaft (24) is integrated into the thick matter separator (1).

7. Plant according to claim 5 or 6, **characterized by** an inspection and collecting chamber (27) for collecting the biologically post-treated water draining from the plant bed (26).

## Revendications

1. Installation d'épuration d'eaux usées, comprenant un séparateur de matières épaisses (1), en forme de récipient, ce séparateur présentant les particularités suivantes :
a) il est prévu dans la paroi du récipient (2), de préférence sur des côtés opposés, une entrée d'eaux usées (3) pour une conduite d'eaux usées (4) qui peut y être raccordée, ainsi qu'une sortie d'eau de rinçage (5) pour l'eau pré-épurée;
b) une partie inférieure (6) du réservoir inclut une zone de décantation pour les matières épaisses et de décantation;
c) le fond (7) de cette zone de décantation est réalisé sous la forme d'un puisard d'aspiration pour une pompe à matières solides (8);
d) dans la zone supérieure du récipient est supporté un insert de déshydratation amovible (9), en forme de cuve, dont le fond est prévu avec des trous de tamis (11);
e) il est prévu sur le fond (10) de l'insert de déshydratation (9) un tamis (13) agencé concentriquement et avec une distance libre par rapport à la paroi (12) de l'insert;
f) le canal de déshydratation annulaire constitué entre le tamis (13), la paroi (12) de l'insert et le fond (10) de l'insert, est rempli avec une masse filtrante (14) en matériaux naturels, en particulier des copeaux de hachage;
g) le fond (10) de l'insert comporte une ouverture d'éjection (16) ouverte vers l'intérieur de l'insert et reliée avec la conduite de refoulement (15) de la pompe, ainsi qu'une plaque de rebond (17) disposée avec une distance libre au-dessus du fond (10) de l'insert et alignée avec l'ouverture d'éjection (16) pour dévier la suspension de matières solides propulsée vers le haut par la pompe;
h) le séparateur de matières épaisses (1) peut être fermé du côté supérieur par un couvercle (21) du récipient, qui présente pour l'intérieur du récipient une ouverture de respiration (22), dans laquelle est prévu un filtre à air biologique (23).

2. Installation selon la revendication 1, **caractérisée en ce que** le séparateur de matières épaisses (1) est réalisé sous la forme d'un récipient vertical de section ronde.

3. Installation selon la revendication 1 ou 2, **caractérisée en ce que** l'insert de déshydratation (9) en forme de cuve repose sur un cadre porteur (18) qui présente une ouverture d'emmanchement (19) constituant l'extrémité de la conduite de refoulement (15) de la pompe, et **en ce qu'**un embout d'emmanchement (20) agencé sur le côté inférieur du fond (10) de l'insert et réalisant la liaison d'écoulement avec ladite ouverture d'éjection (16) s'engage de manière démontable dans l'ouverture d'emmanchement (19).

4. Installation selon la revendication 1, 2 ou 3, **caractérisée en ce que** la paroi de l'insert (12) est également pourvue de trous de tamis (11) et recouverte avec la masse filtrante (14) précitée.

5. Installation selon l'une des revendications précédentes, **caractérisée en ce que** la sortie d'eau de rinçage (5) du séparateur de matières épaisses (1) est raccordée à un puits de pompe (24) qui comporte une pompe d'alimentation (25) pour l'alimentation par le haut d'un lit de plantation (26) traversé par un écoulement vertical.

6. Installation selon la revendication 5, **caractérisée en ce que** le puits de pompe (24) est intégré dans le séparateur de matières épaisses (1).

7. Installation selon la revendication 5 ou 6, **caractérisée par** un puits de collecte et de contrôle (27) captant l'eau ayant subi une post-épuration biologique, partant du lit de plantation (26).
